# DEMANDE DE BREVET EUROPEEN

(11) **EP 1 613 031 A1**
(43) Date de publication de la demande: **04.01.2006**
(21) Numéro de dépôt: 04291634.6
(22) Date de dépôt: 29.06.2004
(51) Int. Cl.: H04M 1/725, H04L 12/58

(54) **Procèdè et terminal de communication pour la saisie et la transmission d'un message mot par mot**

(71) Demandeur: FRANCE TELECOM, 75015 Paris (FR)
(72) Inventeur: Calvet, Philippe, 75014 Paris (FR); Berlandier, Laurent, 75015 Paris (FR)
(74) Mandataire: Remy, Vincent Noel Paul

(57) **Abrégé**

L'invention concerne notamment un procédé de saisie d'un message à partir d'un premier terminal de communication (10) et de transmission de ce message vers un second terminal de communication (40). Le message est constitué de mots séparés entre eux par des caractères spéciaux formant séparateurs sémantiques, les caractères de chaque mot et les séparateurs sémantiques étant destinés à être saisis par un utilisateur à l'aide d'une interface (12) du premier terminal.

La saisie (42) d'un caractère de type séparateur sémantique déclenche (54) l'émission (56) vers le second terminal du mot qui précède ce séparateur sémantique

## Description

La présente invention concerne un procédé de saisie et de transmission d'un message, et un terminal de communication pour la mise en oeuvre de ce procédé.

Plus précisément, la présente invention concerne un procédé de saisie d'un message à partir d'un premier terminal de communication et de transmission de ce message vers un second terminal de communication, le message étant constitué de mots séparés entre eux par des caractères spéciaux formant séparateurs sémantiques, les caractères de chaque mot et les séparateurs sémantiques étant destinés à être saisis par un utilisateur à l'aide d'une interface du premier terminal.

Par "mot", on entend une chaîne de caractères généralement précédée et suivie par un séparateur sémantique. Le mot peut ne pas être précédé d'un séparateur sémantique, mais uniquement lorsqu'il est le premier mot du message. Il peut aussi ne pas être suivi d'un séparateur sémantique, mais uniquement lorsqu'il est le dernier mot du message.

Par "séparateur sémantique", on entend un caractère spécial ne pouvant pas faire partie d'un mot, séparant deux mots d'un message et prédéfini de façon qu'il soit reconnu par les terminaux de communication en tant que séparateur de mots.

On connaît déjà, dans l'état de la technique, un procédé de saisie et de transmission de messages permettant un dialogue interactif entre deux utilisateurs d'ordinateurs fixes reliés entre eux par un réseau de type Internet. Dans un exemple de ce type de procédé, au fur et à mesure que des caractères sont saisis sur un clavier par l'un des deux utilisateurs, ils sont automatiquement envoyés, via le réseau Internet, à l'autre utilisateur et s'affichent l'un après l'autre sur son écran. Autrement dit, l'appui sur une touche du clavier, qui permet de saisir le caractère correspondant à cette touche, déclenche l'envoi de ce caractère.

Il serait particulièrement intéressant de pouvoir mettre en oeuvre un tel procédé de dialogue interactif sur des téléphones mobiles.

Cependant, un téléphone mobile comporte, pour des raisons de limitation d'encombrement, un clavier de saisie restreint, c'est à dire qu'une même touche est associée à plusieurs caractères différents. Plusieurs modes de saisie sont alors adaptés pour ce type de clavier. L'un de ces modes de saisie permet à l'utilisateur de saisir des caractères différents selon le nombre de fois qu'il appuie successivement sur une même touche. Un autre exemple de mode de saisie utilisé sur les claviers de saisie restreints consiste à appuyer sur chaque touche une seule fois par caractère à sélectionner, puis à reconnaître et afficher un mot prédéfini à partir des possibilités de combinaisons possibles de caractères sélectionnés, en cours de saisie du mot.

Ainsi, avec de tels modes de saisie, comme l'appui sur une même touche permet de saisir plusieurs caractères, il n'est pas possible d'appliquer un procédé d'envoi automatique du caractère correspondant à la touche appuyée.

En outre, la transmission, par le réseau de téléphonie mobile, de caractères, l'un après l'autre, encombrerait considérablement le réseau dont le débit est une ressource rare.

On connaît, dans le domaine de la téléphonie mobile, un procédé de transmission de messages dans lequel l'utilisateur saisit un message complet puis l'envoie. Mais ce type de procédé est moins interactif que le procédé utilisé sur les ordinateurs fixes.

Ainsi, il est difficile d'adapter le procédé de dialogue interactif sur des terminaux à clavier de saisie restreint, notamment en raison du mode de saisie utilisé pour ces claviers de saisie.

La présente invention vise à remédier à cet inconvénient en fournissant un procédé et un terminal pour la saisie et la transmission de messages grâce auxquels l'interactivité entre l'émetteur et le récepteur est améliorée, même dans le cas d'échanges de messages à partir de terminaux à claviers de saisie restreints.

A cet effet, l'invention a pour objet un procédé de saisie d'un message à partir d'un premier terminal de communication et de transmission de ce message vers un second terminal de communication, le message étant constitué de mots séparés entre eux par des caractères spéciaux formant séparateurs sémantiques, les caractères de chaque mot et les séparateurs sémantiques étant destinés à être saisis par un utilisateur à l'aide d'une interface du premier terminal, caractérisé en ce que la saisie d'un caractère de type séparateur sémantique déclenche l'émission vers le second terminal du mot qui précède ce séparateur sémantique.

Ainsi, grâce à ce procédé, lorsque l'utilisateur termine la saisie d'un mot, par exemple en appuyant sur la touche "espace" du premier terminal de communication, ce mot est automatiquement transmis au second terminal de communication. Il n'est donc plus nécessaire d'attendre la fin de la composition d'un message pour que celui-ci soit envoyé au second terminal.

Un procédé selon l'invention peut en outre comporter l'une ou plusieurs des caractéristiques suivantes :
- les séparateurs sémantiques sont choisis parmi l'un au moins des éléments de l'ensemble constitué d'un espace, d'un espace souligné, d'un caractère de ponctuation, d'un passage à la ligne ;
- après avoir saisi le dernier mot du message, l'utilisateur déclenche l'émission de ce dernier mot ;
- l'effacement, sur le premier terminal de communication, d'un séparateur sémantique déclenche l'effacement sur le second terminal de communication du mot dont l'émission a été déclenchée par la saisie de ce séparateur sémantique.

L'invention concerne également un terminal de communication comportant des moyens de saisie d'un message et des moyens de transmission de ce message vers un autre terminal de communication, le message étant constitué de mots séparés entre eux par des caractères spéciaux formant séparateurs sémantiques, ledit terminal comportant des moyens de détection de la saisie de séparateurs sémantiques et des moyens de stockage d'un mot en cours de saisie, caractérisé en ce qu'il comporte en outre des moyens de déclenchement de l'émission vers l'autre terminal du mot en cours de saisie, activables par les moyens de détection de la saisie de séparateurs sémantiques.

Un terminal de communication selon l'invention peut en outre comporter l'une ou plusieurs des caractéristiques suivantes :
- les moyens de saisie comprennent un clavier comportant des touches associées chacune à plusieurs caractères différents ;
- Il comporte des moyens de détection d'un nombre d'appuis successifs sur une touche associée à plusieurs caractères différents, pour la détermination du caractère saisi ;
- Il comporte des moyens de détection à chaque instant d'une combinaison de touches activées successivement en cours de saisie d'un mot et des moyens d'association, à cette combinaison de touches activées, d'une combinaison de caractères parmi une liste de combinaisons possibles prédéterminées ;
- il comporte un écran d'affichage de caractères, des moyens d'affichage du message en cours de saisie destiné à être émis vers l'autre terminal dans une première zone prédéterminée de cet écran, et des moyens d'affichage d'un message transmis par l'autre terminal et reçu par ledit terminal dans une seconde zone prédéterminée de cet écran, différente de la première.

L'invention sera mieux comprise à la lecture de la description qui va suivre, donnée uniquement à titre d'exemple et faite en se référant aux dessins annexés dans lesquels :
- la figure 1 est une vue schématique d'un terminal de communication selon l'invention ; et
- la figure 2 est un diagramme fonctionnel d'un procédé de saisie et de transmission de messages selon l'invention.

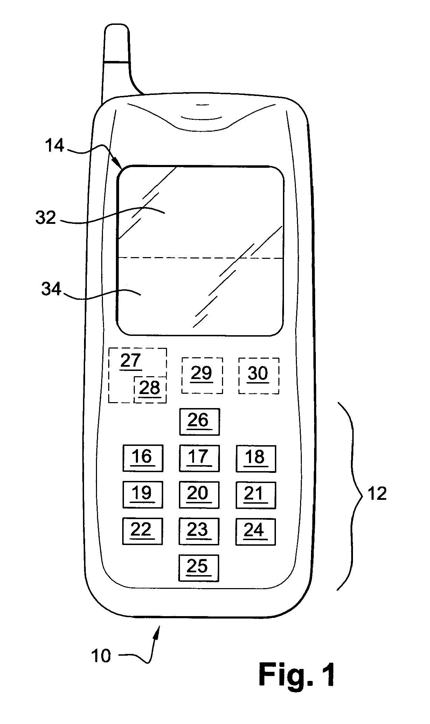

Comme cela est visible sur la figure 1, un terminal de communication selon l'invention est par exemple un téléphone mobile 10, comportant une interface permettant à un utilisateur de saisir ou de lire des informations. Cette interface comprend un clavier 12 pour la saisie de caractères et un écran 14 pour l'affichage de caractères. Le clavier 12 comporte des touches de saisie de caractères 16 à 25, une touche "retour" 26, ainsi que d'autres touches de saisie non représentées.

La touche "retour" 26 est une touche permettant de corriger une erreur en effaçant de l'écran 14 le dernier caractère saisi.

Les touches de saisie 16 à 25 sont associées chacune à plusieurs caractères différents. Ainsi, la touche 16 est associée notamment au chiffre 1 et au caractère "espace". Le caractère "espace" est un caractère spécial au sens de l'invention, formant un séparateur sémantique permettant de séparer les mots entre eux. La touche 17 est associée au chiffre "2", ainsi qu'aux lettres "a", "b" et "c". La touche 18 est associée au chiffre "3", ainsi qu'aux lettres "d", "e" et "f". Les touches 19 à 24 sont également associées chacune à un chiffre et à trois ou quatre lettres (par exemple, la touche 21 est associée au chiffre "6", ainsi qu'aux lettres "m", "n" et "o"). Enfin, la touche 25 est associée au chiffre "0" ainsi qu'au caractère ".", le caractère "." pouvant également être considéré comme un séparateur sémantique selon l'invention.

Dans ce mode de réalisation, seuls les caractères "espace" et "." sont prédéfinis comme des séparateurs sémantiques dans le téléphone mobile 10. Selon d'autres modes de réalisation, d'autres caractères peuvent être prédéfinis comme séparateurs sémantiques, tels que l'espace souligné, le passage à la ligne, le dièse (#), l'arobase (@), des caractères de ponctuation, par exemple la virgule, le point virgule, le point d'interrogation, le point d'exclamation.

Le téléphone mobile 10 comporte en outre des moyens 27 de détection de la saisie d'un caractère, ces moyens 27 comportant notamment des moyens 28 de détection de la saisie d'un séparateur sémantique.

Le téléphone mobile 10 comporte également des moyens de stockage 29 tels qu'une mémoire tampon, permettant de stocker un mot en cours de saisie, appelé dans la suite de la description "mot actif", et des moyens 30 de déclenchement de l'émission du mot actif stocké dans les moyens 29 vers un autre terminal. Les moyens de déclenchement 30 sont activables par les moyens 28 de détection de la saisie d'un séparateur sémantique.

Le téléphone mobile 10 comporte enfin des moyens d'affichage de mots constituant un message en cours de saisie et destiné à être émis vers un autre terminal dans une première zone 32 de l'écran 14, et des moyens d'affichage de mots constituant un message transmis par l'autre terminal et reçu par le téléphone mobile 10 dans une seconde zone 34 de cet écran, différente de la première.

Pour saisir un mot sur le téléphone mobile 10, l'utilisateur le programme au préalable pour qu'il soit en mode de saisie d'un message.

Puis, s'il souhaite par exemple saisir le mot "bonjour", il commence par saisir la première lettre "b". Pour cela, il appuie successivement deux fois sur la touche 17. Alors, les moyens 27 de détection de la saisie d'un caractère reconnaissent que c'est la lettre "b" qui a été saisie et déclenchent le stockage de cette lettre dans la mémoire tampon 29. La lettre "b" constitue la première lettre du mot actif en cours. Pour saisir la seconde lettre, l'utilisateur appuie successivement trois fois sur la touche 21. Les moyens 27 détectent alors que c'est la lettre "o" qui a été saisie et celle-ci est alors stockée dans la mémoire tampon 29, à la suite de la lettre "b". Pour saisir la lettre "n", l'utilisateur appuie successivement deux fois sur la touche 21. Les moyens de détection 27 reconnaissent alors la lettre "n" qui est rajoutée au mot actif "bo" stocké dans la mémoire tampon 29. La suite de la saisie du mot complet se fait de la même façon que pour les premières lettres.

Selon un autre mode de réalisation, le téléphone mobile 10 stocke en mémoire une liste prédéfinie de mots susceptibles d'être saisis par l'utilisateur pour la rédaction de ses messages. Lorsque l'utilisateur veut saisir le mot "bonjour", il appuie une seule fois sur chaque touche associée notamment au caractère qu'il souhaite saisir. Ainsi, il appuie tout d'abord sur la touche 17. Comme cela signifie que le mot qu'il souhaite saisir commence par la lettre "a", "b" ou "c", les moyens de détection 27 sélectionnent, dans la liste prédéfinie de mots, une liste comportant tous les mots commençant par la lettre "a", "b" ou "c". L'écran affiche alors par exemple la lettre "a" dans la zone 32. Puis, lorsqu'il appuie sur la touche 21 pour saisir la seconde lettre de son mot, les moyens de détection 27 sélectionnent dans la liste précédemment sélectionnée, tous les mots pour lesquels la seconde lettre est la lettre "m", "n" ou "o". Ainsi, cette nouvelle liste comporte moins de mots que la liste précédemment sélectionnée. Si cette liste comporte des mots commençant par "am" alors l'écran affiche cette chaîne de caractère. Lorsque l'utilisateur appuie ensuite sur la touche 21 pour saisir la troisième lettre, les moyens de détection 27 sélectionnent, à partir de cette dernière liste, uniquement les mots dont la troisième lettre est "m", "n" ou "o". Lorsque l'utilisateur appuie ensuite sur la touche 20 pour saisir la quatrième lettre de son mot, il n'y a plus, dans la dernière liste sélectionnée par les moyens de détection 27, que le mot "bonjour" et le mot "cool". Le mot "cool" est par exemple affiché. Mais lorsque l'utilisateur appuie sur la touche 21 pour saisir la cinquième lettre de son mot, seul le mot "bonjour" est dans la liste. Ce mot est alors affiché et par exemple également stocké dans la mémoire tampon 29 comme mot actif.

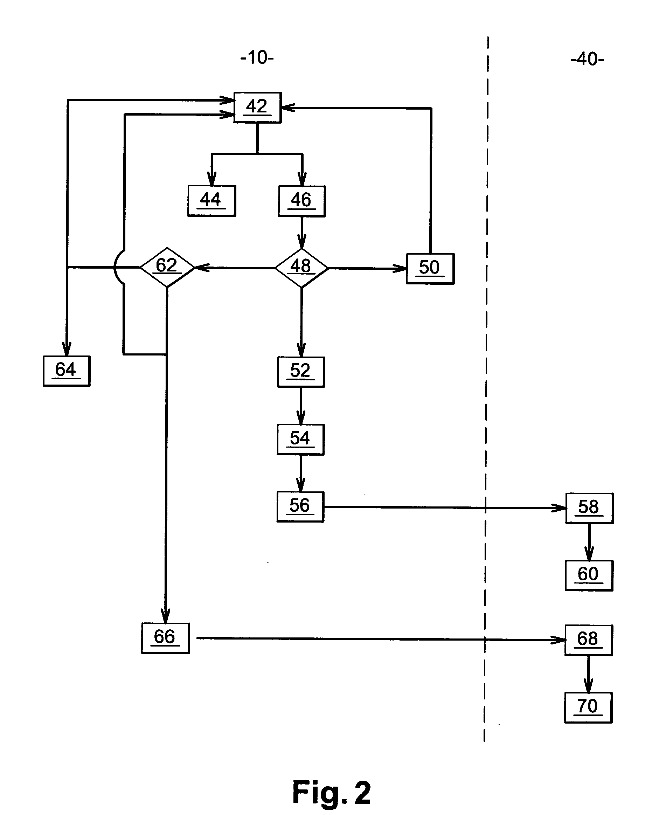

Le procédé de saisie d'un message sur le téléphone mobile 10, et de transmission de ce message vers un autre téléphone mobile 40, par exemple du même type que le téléphone mobile 10, va à présent être décrit en référence à la figure 2.

Le téléphone mobile 10 étant en mode de saisie d'un message, lorsque l'utilisateur saisit un caractère au cours d'une étape 42, en appuyant une ou plusieurs fois successivement sur une même touche, on passe à une étape 44 d'affichage, dans la zone 32 de l'écran 14, du caractère saisi, ainsi qu'à une étape 46 d'analyse, par les moyens de détection 27, du caractère saisi.

L'étape 46 est suivie par une étape de test 48 sur le type de caractère qui a été saisi. En effet, le caractère saisi peut faire partie de trois catégories distinctes :
- une catégorie "séparateur sémantique", si le caractère saisi est reconnu comme étant l'un des séparateurs sémantiques prédéterminés ;
- une catégorie "retour", s'il a été saisi à l'aide de la touche "retour" 26 ; et
- une catégorie "autre" pour les caractères qui n'appartiennent pas aux deux catégories précédentes.

Si le résultat du test est la catégorie "autre", on passe à une étape 50 au cours de laquelle le caractère saisi est stocké dans la mémoire tampon 29, à la suite des caractères déjà présents dans le mot actif stocké dans cette mémoire. S'il n'y a pas de caractère déjà stocké, le caractère saisi constitue le premier caractère d'un nouveau mot actif. A la suite de l'étape 50, le procédé est reporté à l'étape 42.

Si le résultat du test 48 est la catégorie "séparateur sémantique », on passe à une étape 52 de détection, par les moyens 28, de la saisie d'un séparateur sémantique.

On passe ensuite à une étape 54 de déclenchement de l'émission du mot actif stocké dans la mémoire tampon 29 vers le téléphone mobile 40, grâce aux moyens de déclenchement 30. Le mot actif stocké est le mot qui précède, dans le message destiné à être transmis au téléphone mobile 40, le séparateur sémantique détecté. On passe alors à une étape 56 d'émission du mot actif vers le téléphone mobile 40.

De préférence, le séparateur sémantique dont la saisie a déclenché l'émission du mot actif est transmis avec le mot actif au téléphone mobile 40.

A la suite de l'étape d'émission 56, on passe à une étape 58 de réception du mot actif par le téléphone mobile 40, puis à une étape 60 d'affichage de ce mot actif sur l'écran du téléphone mobile 40.

Si le séparateur sémantique a également été transmis avec le mot actif, il est affiché à la suite du mot actif sur l'écran du téléphone mobile 40.

Si le résultat du test 48 est la catégorie "retour", on passe à une étape de test 62 au cours de laquelle on recherche quelle est la catégorie du caractère qui précède, dans le message, le caractère "retour" saisi.

Si le résultat du test 62 est la catégorie "autre", on passe à une étape 64 au cours de laquelle on efface ce caractère précédent du mot actif stocké dans la mémoire tampon 29. Ce caractère est alors considéré comme effacé du message. Le procédé est ensuite reporté à l'étape 42.

Si le résultat du test 62 est la catégorie "séparateur sémantique", c'est-à-dire si le caractère qui précède le caractère "retour" est un séparateur sémantique, on passe à une étape 66 au cours de laquelle le téléphone mobile 10 transmet au téléphone mobile 40 une requête d'effacement du dernier mot affiché et le procédé est reporté à l'étape 42.

On passe ensuite à une étape 68 de réception de la requête d'effacement par le téléphone mobile 40. A la suite de cette étape 68, on passe à une étape 70 au cours de laquelle le dernier mot actif envoyé par le téléphone mobile 10 sur le téléphone mobile 40 est effacé de l'écran du téléphone mobile 40.

Enfin, lorsque l'utilisateur a saisi le dernier mot de son message et qu'il ne saisit pas de séparateur sémantique, il peut appuyer sur une touche d'émission de ce mot, par exemple une touche « Entrée » ou une touche spécifique, pour envoyer ce dernier mot vers le second terminal de communication.

Il apparaît clairement que le procédé précédemment décrit, en permettant l'envoi automatique de messages mot par mot, améliore l'interactivité des échanges de messages entre téléphones mobiles.

## Revendications

1. Procédé de saisie d'un message à partir d'un premier terminal de communication (10) et de transmission de ce message vers un second terminal de communication (40), le message étant constitué de mots séparés entre eux par des caractères spéciaux formant séparateurs sémantiques, les caractères de chaque mot et les séparateurs sémantiques étant destinés à être saisis par un utilisateur à l'aide d'une interface (12) du premier terminal, **caractérisé en ce que** la saisie (42) d'un caractère de type séparateur sémantique déclenche (54) l'émission (56) vers le second terminal du mot qui précède ce séparateur sémantique.

2. Procédé selon la revendication 1, dans lequel les séparateurs sémantiques sont choisis parmi l'un au moins des éléments de l'ensemble constitué d'un espace, d'un espace souligné, d'un caractère de ponctuation, d'un passage à la ligne.

3. Procédé selon la revendication 1 ou 2, dans lequel, après avoir saisi le dernier mot du message, l'utilisateur déclenche l'émission de ce dernier mot.

4. Procédé selon l'une quelconque des revendications 1 à 3, dans lequel l'effacement (62), sur le premier terminal de communication (10), d'un séparateur sémantique déclenche (66) l'effacement (70) sur le second terminal de communication (40) du mot dont l'émission a été déclenchée par la saisie de ce séparateur sémantique.

5. Terminal de communication (10) comportant des moyens (12) de saisie d'un message et des moyens de transmission de ce message vers un autre terminal de communication (40), le message étant constitué de mots séparés entre eux par des caractères spéciaux formant séparateurs sémantiques, ledit terminal comportant des moyens (28) de détection de la saisie de séparateurs sémantiques et des moyens (29) de stockage d'un mot en cours de saisie, **caractérisé en ce qu'**il comporte en outre des moyens (30) de déclenchement de l'émission vers l'autre terminal du mot en cours de saisie, activables par les moyens (28) de détection de la saisie de séparateurs sémantiques.

6. Terminal de communication (10) selon la revendication 5, dans lequel les moyens de saisie (12) comprennent un clavier comportant des touches associées chacune à plusieurs caractères différents.

7. Terminal de communication (10) selon la revendication 6, comportant des moyens de détection d'un nombre d'appuis successifs sur une touche associée à plusieurs caractères différents, pour la détermination du caractère saisi.

8. Terminal de communication (10) selon la revendication 6, comportant des moyens de détection à chaque instant d'une combinaison de touches activées successivement en cours de saisie d'un mot et des moyens d'association, à cette combinaison de touches activées, d'une combinaison de caractères parmi une liste de combinaisons possibles prédéterminées.

9. Terminal de communication (10) selon l'une quelconque des revendications 5 à 8, comportant un écran (14) d'affichage de caractères, des moyens d'affichage du message en cours de saisie destiné à être émis vers l'autre terminal (40) dans une première zone (32) prédéterminée de cet écran, et des moyens d'affichage d'un message transmis par l'autre terminal (40) et reçu par ledit terminal (10) dans une seconde zone (34) prédéterminée de cet écran, différente de la première.
